Europäisches Patentamt

**European Patent Office**

Office européen des brevets

(19)

(11) Veröffentlichungsnummer: **0 264 049**
**B1**

# EUROPÄISCHE PATENTSCHRIFT

(12)

(45) Veröffentlichungstag der Patentschrift:
**28.02.90**

(21) Anmeldenummer: **87114552.0**

(22) Anmeldetag: **06.10.87**

(51) Int. Cl.⁴: **B01J 2/00, B01J 2/10,**
**B01J 2/16, C09B 67/00,**
**C09C 1/58**

(54) **Verfahren zur Herstellung von Granulaten.**

(30) Priorität: **17.10.86 DE 3635313**

(43) Veröffentlichungstag der Anmeldung:
**20.04.88 Patentblatt 88/16**

(45) Bekanntmachung des Hinweises auf die Patenterteilung:
**28.02.90 Patentblatt 90/9**

(84) Benannte Vertragsstaaten:
**CH DE FR GB LI**

(56) Entgegenhaltungen:
**FR-A- 1 469 883**
**US-A- 2 306 698**
**US-A- 4 238 199**

(73) Patentinhaber: **BAYER AG,**
**D-5090 Leverkusen 1 Bayerwerk(DE)**

(72) Erfinder: **Kaspar, Vaclav, Dipl.-Ing., Morgengraben 2,**
**D-5000 Koeln 80(DE)**
Erfinder: **Baecker, Manfred, Dipl.-Ing., Im Kerberich 38a,**
**D-5068 Odenthal(DE)**
Erfinder: **Brandt, Horst, Dr., Antoniusstrasse 4,**
**D-5068 Odenthal(DE)**
Erfinder: **Grimmelijkhuizen, Friedrich, Kaiserstrasse 11,**
**D-5090 Leverkusen(DE)**
Erfinder: **Wolf, Karlheinz, Dr., Paul-Klee-Strasse 77,**
**D-5090 Leverkusen(DE)**

## Beschreibung

Gegenstand der Erfindung ist ein Verfahren zur Herstellung von in Wasser leicht dispergierbaren bzw. darin löslichen, lagerstabilen Granulaten, insbesondere Farbstoffgranulaten, durch Aufbaugranulation.

Es ist bereits bekannt (vgl. A 2 716 478 = GB 1 567 734), Farbstoffgranulate dadurch zu erzeugen, daß man in ein Wirbelbett aus Farbstoffteilchen eine wäßrige Farbstofflösung sprüht.

Weiterhin ist bekannt geworden (vgl. DE-A 2 844 710 = GB 1 511 746), Granulate durch Behandlung von Pigmentpulvern mit Granulierungshilfsmitteln im Fließbett zu erzeugen.

Gemäß EP-A 24 654 wird vorgeschlagen, wäßrige Zubereitungen von Reaktivfarbstoffen auf ein Wirbelbett zu sprühen, nachdem breits in DE-A 2 263 968 eine ähnliche Technik für wasserunlösliche Farbstoffe beschrieben worden war.

Die genannten Verfahren weisen jedoch den Nachteil auf, daß sie hohe Verweilzeiten benötigen und zur Erzielung hoher Tonnagen große, kostspielige Apparaturen erfordern.

Ausserdem ist allgemein bekannt (vgl. Chemie-Technik 6, 277), Granulate durch Granuliuerung in Zwangsmischern wie z.B. Pflugscharmischern, und anschließende Trocknung im Wirbelbett zu erzeugen. Allerdings handelt es sich bei diesen diskontinuierlichen Verfahren um eine Methode zur Herstellung von wenig stabilen, nicht abriebfesten Granulaten zur Weiterverarbeitung zu Tabletten.

US-A 4 238 199 beschreibt ein Verfahren zur Herstellung von Ruß-Granulaten in Zwangsmischern mit anschließender Trocknung , wobei man in kontinuierlicher Arbeitsweise das zu granulierende pulverförmige Material mit Hilfe relativ großer Mengen einer Granulierflüssigkeit in einem schnell laufenden Mischgranulator granuliert, das erhaltene Produkt unmittelbar einem langsam laufenden Mischgranulator zum Nachgranulieren zuführt und anschließend in einem Trommel-Trockner trocknet.

Schließlich zeigt FR-A 1 469 883 ein Verfahren zur Herstellung von Granulaten in einem Zwangsmischer und anschließende Trocknung in einem Wirbelbett, wobei man in kontinuierlicher Arbeitsweise das zu granulierende pulverförmige Material mit Hilfe einer mit Wasser nicht mischbaren Granulierflüssigkeit in einem Mischgranulator granuliert und anschließend in einem Wirbelschicht-Trockner trocknet.

Es wurde nun gefunden, daß man lagerstabile Granulate erhält, wenn man das zu granulierende pulverförmige Material mit Hilfe einer Granulierflüssigkeit in einem schnellaufenden Mischgranulator granuliert, das erhaltene Produkt unmittelbar, d.h. ohne Unterbrechung des Produktstroms, einem langsam-laufenden Mischgranulator zur Nachgranulation zuführt und anschließend wiederum ohne Unterbrechung des Produktstromes in einem Wirbelschicht-Trockner trocknet, dadurch gekennzeichnet, daß

a) die Drehzahl der Welle des ersten Mischers 800–3000 M/min und die des zweiten Mischers 60–250 M/min beträgt,

b) die Menge an zugesetzter Granlierflüssigkeit im ersten Mischer 10–50 Gew-% und im zweiten Mischer 0–10 Gew-% – jeweils bezogen auf Pulvermasse – beträgt,

c) die Granulierflüssigkeit Wasser ist, das ggf. Zusatzstoffe enthält und

d) die zu granulierenden Substanzen wasserlösliche Stoffe sind und

e) die Trocknung unter gleichzeitiger Besprühung mit einem Formierhilfsmittel erfolgt.

Das als Granulierflüssigkeit eingesetzte Wasser, das vorzugsweise bei 20-30°C zugegeben wird, kann gegebenenfalls Zusatzstoffe wie Puffersubstanzen, Tenside, Bindemittel u. a., enthalten.

Die dem Trockner zugeführten Formulierhilfsmittel sind insbesondere 5-60 Gew.-%ige wäßrige Lösungen von Binde- und Stellmitteln wie Zucker, Stärke, Caprolactam, Alginate, Dextrin, Polyvinylpyrrolidon, Polyvinylalkohol, Carboxymethylcellulose, Tenside wie Polyethylenoxide, Polyethylenpropylenoxide, oxalkylierte Fettalkohole, Ligninsulfonsäuren und Alkylbenzolsulfonsäuren. Entstaubungsmittel wie Öl/Emulgator-Mischungen, wobei als "Öle" Paraffinöl, Phthalsäureester, Glycerinester in Betracht kommen, Die letztgenannten wasserunlöslichen Verbindungen können auch als solche, d.h. ohne Zugabe von Wasser, versprüht werden.

Die Einsatzmenge beträgt 0,2-10 Gew.-% der Pulvermasse.

Bei den zu granulierenden Substanzen handelt es sich um beliebige organische, vorzugsweise wasserlösliche Stoffe, wie z.B. Nahrungs- und Genußmittel, Pflanzenschutzmittel, Pharmazeutika und vor allem Farbstoffe.

Geeignete Farbstoffe sind insbesondere kationische und anionische Typen aller Substanzklassen sowie sulfogruppenhaltige optische Aufheller. Bevorzugt sind Reaktivfarbstoffe und kationische Farbstoffe der Azoreihe.

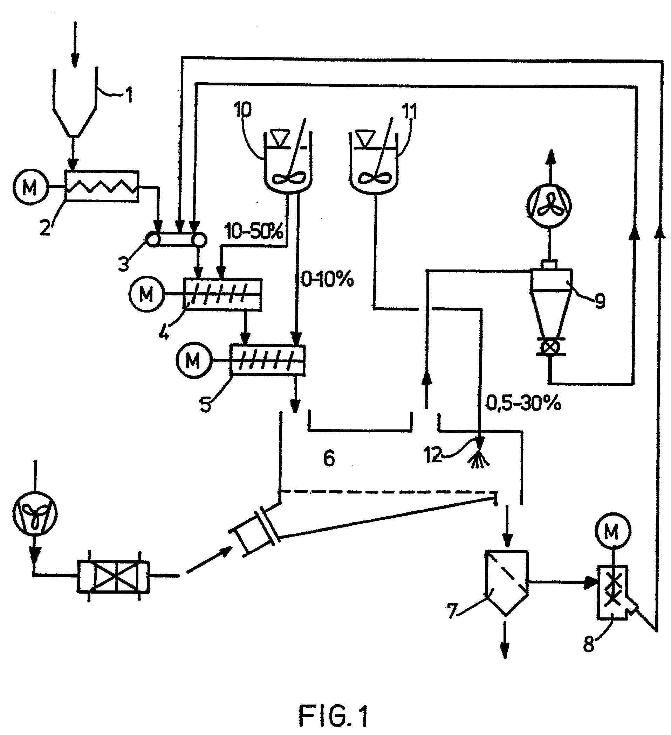

Bei der praktischen Durchführung des erfindungsgemäßen Verfahrens geht man zweckmäßigerweise so vor (vgl. Fig. 1):

Das eingestellte Farbstoffpulver wird aus dem Silo (1) über eine Dosierschnecke (2) mit Hilfe einer Differntialdosierwaage (3) in den Mischer (4) kontinuierlich zudosiert. Unter kontinuierlicher Zugabe der Granulierflüssigkeit aus Behälter (10) findet hier die Granulation statt. Das Produkt geht dann in den Mischer (5), in welchem im Bedarfsfall weitere Granulierflüssigkeit eingesprüht wird. Anschließend wird das feuchte Granulat kontinuierlich in dem Wirbelbett (6) bei gleichzeitiger Einsprühung (12) der aus dem Behälter (11) entnommenen Flüssigkeit getrocknet und über ein Sieb (7) ausgetragen. Die Teilchen mit einem Korndurchmesser > 2,5 mm werden in dem Desintegrator (8) zerkleinert. Die dem Trockner (6) entweichende Luft wird in dem Zyklon (9) entstaubt. Der dabei anfallende Feststoffanteil wird in den Kreislauf zurückgeführt.

Geeignete schnellaufende Mischer (4) sind von horizontaler oder vertikaler Bauart. Sie zeichnen sich durch geringe Verweilzeiten (0,5-60 Sekunden) der zu vermischenden Stoffe aus.

Die Zudosierung der Granulierflüssigkeit erfolgt über Rohrleitungen unter Druck oder durch Verdüsen.

Die Mischwerkzeuge sind aus verschleißfestem Material und können verschiedene Formen, wie z.B. umlaufende Messer, stumpfe Mischflügel, Schaufeln u. dgl., aufweisen.

Die Drehzahl der Welle beträgt 800-3000 M/min.

Beispielhaft für einen derartigen Mischer sei der "Recycler CB30" der Firma Loedige, Bundesrepublik Deutschland oder der Firma Schugi "Flexomix 160", Holland genannt.

Geeignete langsamlaufende Mischer (5) sind solche, deren Mischwerkzeuge auf einer horizontalen Welle aufgebracht sind, die eine Drehzahl von 60 bis 250 M/min aufweist. Die Verweilzeit beträgt hier 60-300 Sekunden.

Die Auftragung der Flüssigkeit erfolgt ähnlich wie beim Mischer (4).

Besonders bewährt haben sich Pflugscharmischer z.B. der KM-Mischer der Firma Loedige.

Für die kontinuierliche Trocknung eignen sich im Handel erhältliche Wirbelschicht-bzw. Fließbett-Trockner, z.B. vom Typ "Escher Wyss", die zweckmäßigerweise im letzten Drittel des Trocknungszyklus mit Düsen, vorzugsweise Zweistoffdüsen, ausgerüstet sind.

Die nach dem erfindungsgemäßen Verfahren erhältlichen Granulate zeichnen sich durch eine enge Korngrößenverteilung, gute Rieselfähigkeit, gute Löslichkeit bzw. gute Redispergierbarkeit, Transportstabilität und Staubfreiheit aus.

Beispiel 1

1300 kg/h eines handelsüblichen Monoazomonofluortriazinfarbstoffs (6 % Restfeuchte, ⌀ Korngröße 80 μm, Schüttgewicht 0,65 kg/l) werden gravimetrisch über eine Differentialdosierwaage einem horizontal angeordneten, kontinuierlichen Granulationsmischer (Innendurchmesser 30 cm, Länge 120 cm, Mischwelle mit speziellen Misch- und Förderwerkzeugen bestückt) zugeführt. Durch die hohe Geschwindigkeit der Mischwelle (1500 UpM, entsprechend einer Umfangsgeschwindigkeit von ca. 23,5 m/sek) wird das Produkt ringschichtförmig an der Peripherie des Mischers verteilt und bewegt.

Nach dem 1. Drittel erfolgt durch 3 tangential angeordnete Zuleitungen die Zugabe von 350 l/h Wasser. Nach spontaner Vermischung der Komponenten beginnt die Granulatbildung als Wechselwirkung einer kontinuierlichen Agglomeration und Desagglomeration.

Das granulatförmige Gemisch verläßt den Granuliermischer mit einer Restfeuchte von 25,9 %. Die mittlere Korngröße beträgt jetzt ca. 600 μm, das Schüttgewicht liegt bei 0,72 kg/l (alle Meßwerte von trockener Ware).

Danach gelangt das feuchte Granulat in eine weitere kontinuierlich arbeitende, zylindrische, horizontal angeordnete Mischtrommel (Länge 150 cm, Durchmesser 50 cm) (alle Meßwerte von trockener Ware). Die zentrisch angeordnete Mischwelle, ausgestattet mit pflugscharähnlichen Spezialmischwerkzeugen, dreht mit 140 UpM, entsprechend einer Umfangsgeschwindigkeit von etwa 3,7 m/sek. Der über ein am Auslauf befindliches Stauwehr geregelte Füllstand beträgt ca. 33 %, entsprechend einer Verweilzeit des Produktes im Mischer von ca. 150 sek.

In der Nähe des Produkteinlaufschachtes werden von oben senkrecht auf das Produktbett 30 l/h Wasser eingedüst.

Die Mischwerkzeuge ebenso wie das Wasser über sowohl eine agglomerierende als auch eine kompaktierende Wirkung aus. Im mittleren Teil des Mischers zerkleinert ein Zerhacker (1500 UpM) größere Agglomerate.

Nach Verlassen des 2. Mischers weist das Granuliergut eine Restfeuchte von 27,3 %, eine mittlere Korngröße von 800 μm sowie ein Schüttgewicht von 0,83 kg/l auf.

Das so beschaffene Material gelangt sodann in einen kontinuierlich arbeitenden Fließbettrockner. In der 1. Sektion des Trockners wird das granulierte Produkt bei einer Zulufttemperatur von 140° C auf seine Ursprungsfeuchte getrocknet.

In der 2. Sektion werden über 5 Düsen 150 l/h einer 25 %igen Zuckerlösung von oben senkrecht auf das Produktbett gesprüht. In der gleichen Sektion wird simultan bei einer Zulufttemperatur von 120° C auf die Ursprungsfeuchte zurückgetrocknet.

In einer 3. Sektion des Trockners findet durch Fluidisierung mit Luft von Raumtemperatur eine Abkühlung des Produktes auf ca. 40° C statt.

Die Anströmgeschwindigkeit, bezogen auf die Gesamtfläche des Conidurbodens, beträgt 0,8 m/sek. Partikel von < 150 μm werden durch die Fluidisierungsluft aus dem Produktstrom abgetrennt und gehen mit der Abluft in einen nachgeschalteten Zyklon.

Der Gutkornstrom verläßt den Trockner mit einem Kornspektrum zwischen 0,2 und 2,5 mm (Medianwert 0,8 mm).

Beispiel 2

Verfährt man wie in Beispiel 1, verwendet jedoch in dem Fließbettrockner statt der Zuckerlösung 30 l/h Phthalsäuredimethylester, so erhält man ein Granulat ähnlicher Qualität.

Beispiel 3

Ersetzt man den Reaktivfarbstoff in Beispiel 1 durch den kationischen Farbstoff Basic Yellow 28 (C.I. 48054) mit einer Restfeuchte von 3 %, einer Korngröße von 70 μm und einem Schüttgewicht von 0,80 kg/l und verwendet im ersten Mischer nur 200 l/h Waser und im Trockner 35 l/h einer Mischung aus 4 Gew.-Teilen Paraffinöl, 15 Gew.-Teilen Nonylphenol 6EO und 0,5 Gew.-Teilen Wasser, so erhält man unter sonst gleichen Bedingungen ein einwandfreies Farbstoffgranulat.

Beispiel 4

Verfährt man wie in Beispiel 1, ersetzt jedoch die Zuckerlösung durch 52 kg/h einer 25%igen Lösung von Polyethylenoxid der Molmasse 4000, so erhält man ein abriebfestes, lagerstabiles und staubfreies Farb-stoffgranulat.

Beispiel 5

Analog Beispiel 4 erzeugt eine 25%ige wäßrige Lösung von einem Copolymerisat von Ethylen- und Propylenoxid mit eine Molmasse von 6800 eine ähnliche Granulatqualität.

Patentansprüche

1. Verfahren zur kontinuierlichen Herstellung von Granulaten, wobei man das zu granulierende pulverförmige Material mit Hilfe einer Granulierflüssigkeit in einem schnellaufenden Mischgranulator granuliert, das erhaltene Produkt unmittelbar einem langsam laufenden Mischgranulator zugührt und anschließend in einem Wirbelbetttrockner trocknet, dadurch gekennzeichnet, daß
a) die Drehzahl der Welle des ersten Mischers 800–300 M/min und die des zweiten Mischers 60–250 M/min beträgt,
b) die Menge an zugesetzter Granulierflüssigkeit im ersten Mischer 10–50 Gew-% und im zweiten Mischer 0–10 Gew-%- jeweils bezogen auf Pulvermasse - betägt,
c) die Granulierflüssigkeit Wasser ist, das ggf. Zusatzstoffe enthält und
d) die zu granulierenden Substanzen wasserlösiche Stoffe sind und
e) die Trocknung unter gleichzeitiger Besprühung mit einem Formierhilfsmittel erfolgt.
2. Verfahren nach Anspruch 1, dadurch gekennzeichnet, daß im zweiten Mischer ein Zerhacker angebracht ist.
3. Verfahren nach Anspruch 1, dadurch gekennzeichnet, daß das Formierhilfsmittel im Trockner in Mengen von 0,2–10 Gew.-%-bezogen auf Pulvermasse - eingesetzt wird.
4. Verfahren nach Anspruch 1, dadurch gekennzeichnet, daß das Formierhilfsmittel eine wäßrige Lösung von Bindemitteln ist.
5. Verfahren nach Anspruch 1 oder 4, dadurch gekennzeichnet, daß der Bindemittelanteil in dem den Trockner zugeführten Hilfsmittel 5–60 Gew.-%-bezogen auf Pulvermasse-beträgt.
6. Verfahren nach Anspruch 1, dadurch gekennzeichnet, daß das zu granulierende Material ein Farbstoff ist.

Claims

1. Process for the continuous preparation of granules, in which the pulverulent material to be granulated is granulated in a high-speed mixing granulator with the aid of a granulating liquid and the product obtained is fed directly to a slow-speed mixing granulator and is then dried in a fluidized bed drier, characterized in that

a) the speed of rotation of the shaft of the first mixer is 800 - 3,000 rpm and that of the second mixer is 60 - 250 rpm,
b) the amount of granulating liquid added is 10 - 50 % by weigth in the first mixer and 0 - 10 % by weigth in the second mixer, in each case relative to the powder mass,
c) the granulating liquid is water, if appropriate containing additives, and
d) the substances to be granulated are water-soluble substances and
e) the drying is carried out while simultaneously spraying with a fromulating auxiliary.
2. Process accaording to Claim 1, characaterized in that a chopper is fitted in the second mixer.
3. Process according to Claim 1, characterized in that the formulating auxiliary in the drier is used in amounts of 0.2 - 10 % by weight relative to the powder mass.
4. Process accaording to Claim 1, characaterized in that the formulating auxiliary is an aqueous solution of binders.
5. Process according to Claim 1 or 4, characterized in that the binder content in the auxiliary added to the drier is 5 - 60 % by weight relative to the powder mass.
6. Process according to Claim 1, characterized in that the material to be granulated is a dyestuff.

Renvendications

1. Procédé pour préparer en continu des granulés, selon lequel on granule la matière pulvérulente à granuler, à l'aide d'un liquide de granulation, dans un granulateur mélangeur tournant à grande vitesse, on achemine immédiatement le prouduit ainsi obtenu vers un mélangeur granulateur à fonctionnement lent, puis on sèche le produit dans un sécheur à lit tourbillonnaire, procédé caractérisé en ce que:

a) la vitesse de rotation de l'arbre due premier mélangeur est de 800 à 3 000 M/min et celle du second mélangeur est de 60 à 250 M/min,
b) la quantité du liquide de granulation ajoutée est, dans le premier mélangeur, de 10 à 50 % en poids et, dans le second mélangeur, de 0 à 10 % en poids, chaque fois sur la base de la masse pulvérulente,
c) le liquide de granulation est de l'eau, qui contient éventuellement des additifs, et
d) les substances à granuler sont des substances hydrosolubles, et
e) le séchage a lieu sou arrosage à l'aide d'un agent de mise en forme.
2. Procédé selon la revendication 1, caractérisé en ce qu'un hachoir est monté dans le second mélangeur.
3. Procédé selon la revendication 1, caracatérisé en ce que l'adjuvant de mise en forme est introduit dans le sécheur en des quantités de 0,2 à 10 % en poids, sur la base de la masse pulvérulente.
4. Procédé selon la revendication 1, caractérisé en ce que l'agent adjuvant de mise en forme est une solution aqueuse de liant.
5. Procédé selon la revendication 1 ou 4, caractérisé en ce que la proprtion du liant dans l'adjuvant introduit dans le sécheur représente 5 à 60 % en poids, sur la base de la masse pulvérulente.

6. Procédé selon la revendication 1, caractérisé en ce que la matière à granuler est un colorant.

FIG.1